# EUROPÄISCHE PATENTANMELDUNG

(11) **EP 3 300 606 A1**
(43) Veröffentlichungstag der Anmeldung: **04.04.2018**
(21) Anmeldenummer: 16191066.6
(22) Anmeldetag: 28.09.2016
(51) Int. Cl.: A23C 9/142, A23C 21/00, A23J 3/08

(54) **AUFSCHÄUMBARE MILCHZUBEREITUNG**

(71) Anmelder: DMK Deutsches Milchkontor GmbH, 27404 Zeven (DE)
(72) Erfinder: BORCHERDING, Katja, 27404 Zeven (DE)
(74) Vertreter: Fabry, Bernd

(57) **Zusammenfassung**

Vorgeschlagen wird eine aufschäumbare Milchzubereitung, enthaltend oder bestehend aus
(a) mindestens einem Milchprodukt und
(b) einem Zusatzstoff, der erhalten wird, in dem man ein Milchprodukt einer Filtration unterwirft, das Permeat abnimmt und es gegebenenfalls einer Temperaturnachbehandlung unterwirft.

## Beschreibung

### GEBIET DER ERFINDUNG

Die Erfindung befindet sich auf dem Gebiet der Molkereiprodukte und betrifft Milchprodukte, denen zur besseren Schaumbildung Milchpermeate zugesetzt werden, ein Verfahren zur Herstellung der Milchprodukte sowie die Verwendung der Milchpermeate.

### STAND DER TECHNIK

Für viele Kaffeespezialitäten sind Milchschäume unentbehrlich. Sie entstehen durch das Aufschäumen von Milch oder Milchprodukten, wobei deren Eiweiße und Fette Strukturen bilden, die Luftbläschen umschließen. Bei der Zubereitung von Milchschaum für verschiedene auf Kaffee, insbesondere Espresso basierende Getränke wie Latte macchiato oder Cappuccino wird Milch mit Luft durchmischt. Die Porengröße des Schaumes ist außer vom Fettgehalt und der Temperatur der Milch auch von der Dauer der Zubereitung abhängig. Durch Kontrolle dieser Parameter variiert man die chemischen Gleichgewichte in der Emulsion. Physikalische und chemische Einflussfaktoren der Milchschäume werden beschrieben in der Dissertation von K. Borcherding mit dem Titel "Untersuchungen zur Charakterisie-rung der Makro- und Mikrostruktur von Milchschäumen", Universität Kiel (urn:nbn:de:gbv:8-diss-13056) aus dem Jahre 2004.

Automaten zur Herstellung von Kaffeegetränken, die mit einer zusätzlichen Vorrichtung zur Herstellung von Milchschaum versehen sind, sind ebenfalls hinreichend bekannt, beispielsweise aus EP 2658420 A1 (JURA).

Nachteilig ist, dass der Schaum insbesondere bei maschineller Zubereitung häufig rasch zusammenfällt, was zwar keinen geschmacklichen Mangel bewirkt, das Getränk aber optisch nicht mehr ansprechend erscheinen lässt. Ebenfalls von Nachteil ist, dass in Abhängigkeit der verwendeten Milch mitunter erst gar keine ausreichende Menge an Schaum erzeugt wird.

Die Aufgabe der vorliegenden Erfindung hat daher darin bestanden, Milchprodukte zur Verfügung zu stellen, die sich dadurch auszeichnen, dass sie beim Aufschäumen einen kräftigen und beständigen Schaum entwickeln. Weiterhin bevorzugt wäre es, wenn durch den Zusatz einer schäumenden Verbindung auch noch eine geschmackliche Verbesserung erzielt würde.

### BESCHREIBUNG DER ERFINDUNG

Ein erster Gegenstand der Erfindung betrifft eine aufschäumbare Milchzubereitung, enthaltend oder bestehend aus
(a) mindestens einem Milchprodukt und
(b) einem Zusatzstoff, der erhalten wird, in dem man ein Milchprodukt einer Filtration unterwirft, das Permeat abnimmt und es gegebenenfalls einer Temperaturnachbehandlung unterwirft.

Überraschenderweise wurde gefunden, dass schon der Zusatz geringer Mengen an Milchpermeaten, die die Gruppe (b) bilden, dazu führt, dass die Milchprodukte beim Aufschlagen mehr Schaum bilden und dieser Schaum auch länger bestehen bleibt. Alternativ ist es möglich, die Permeate direkt aufzuschäumen und den Milchprodukten zuzugeben. Ebenfalls nicht zu erwarten war die Feststellung, dass die Permeate in verschiedenen Produkten zusätzlich auch noch zu einer geschmacklichen Verbesserung führen.

### MILCHPRODUKTE

Die aufschäumbaren Milchprodukte können als Basiskomponente Magermilch, im Fettgehalt eingestellte Milch, pasteurisierte Milch, hocherhitzte Milch, Ultrahocherhitzter Milch, Kondensmilch, Molke, Edelmolke, Sauermilch, Sauermilchprodukte, Rahm, Sahne, Joghurt, Kefir und Ayran sowie deren Gemische enthalten. Vorzugsweise handelt es sich um Magermilch und im Fettgehalt eingestellte Milch. Die aufgeschäumten Milchprodukte können selbst konsumiert werden, wie beispielsweise als Milchschaum, im Kaffee oder dergleichen oder aber als Bestandteile weiterer Lebensmittelzubereitungen, wie etwa Suppen oder Saucen dienen.

### PERMEATE

Als Zusatzstoff für die Milchprodukte, die ein stärkeres Schäumen und einen längeren Schaumbestand ermöglichen kommen Permeate aus der Filtration einer Magermilch, Magermilchkonzentrate, im Fettgehallt eingestellte Milch, Konzentrate aus im Fettgehalt eingestellter Milch, , pasteurisierte Milch, hocherhitzte Milch, ultrahocherhitzter Milch, Kondensmilch, Molke, Edelmolke, Sauermilch oder Sauermilchprodukten in Frage. Derartige "Milchpermeate" insbesondere Permeate auf Basis von Magermilch sind seit langem bekannt. Es handelt sich um wässrige Flüssigkeiten, die bei der Filtration anfallen und bei der dem Einsatzprodukt Eiweiß und Milchfett entzogen wird. Zurück bleiben Vitamine,Mineralstoffe und Lactose.

Der Anwendungsbereich für Milchpermeate ist derzeit überschaubar: wenn die Fraktionen nicht im Prozess direkt weiterverwendet werden, wie beispielsweise bei der Gewinnung von Speisequark (vgl. z.B. DE 10 2012 10049511, FINNAH), dienen sie insbesondere zur Herstellung der türkischen Spezialität Ayran, der aus Wasser, verdünntem Joghurt und Salz besteht. Darüber hinaus kann Milchpermeat als Kulturmedium für verschiedene Mikroorganismen dienen (EP 2725098 A1, QUEIZUAR) oder als Bestandteil von ballaststoffreichen Nahrungsmitteln (EP 2887814 B1, GERVAIS).

Für die Herstellung der Permeate eignen sich grundsätzlich alle bekannten Filtrationsverfahren, als da sind: Diafiltration, Mikrofiltration, Ultrafiltration, Nanofiltration, Umkehrosmose, Elektrodialyse oder eine Kombination dieser Schritte, wie sie nachfolgend näher beschrieben werden.

Üblicherweise enthalten die aufschäumbaren Milchprodukte die Permeate in Mengen von etwa 0,25 bis etwa 20 Gew.-%, vorzugsweise etwa 1 bis etwa 10 Gew.-% und insbesondere etwa 2,5 bis etwa 7,5 Gew.-% des Zusatzstoffes (b).

### VERFAHREN

Ein weiterer Gegenstand der Erfindung betrifft ein Verfahren zur Herstellung einer aufgeschäumten Milchzubereitung, umfassend die folgenden Schritte:
(a1) Bereitstellen eines ersten Milchproduktes (a);
(a2) Bereitstellen eines zweiten Milchproduktes (b);
(a3) Unterwerfen des zweiten Milchproduktes einer Filtration unter Erhalt eines Permeats und eines Retentats;
(a4) gegebenenfalls Wärmebehandlung des Permeats;
(a5) Versetzen des ersten Milchproduktes (a) mit dem gegebenenfalls wärmebehandelten Permeat des zweiten Milchproduktes (b); und
(a6) Aufschäumen der Mischung unter Eintragung von Luft oder Inertgas oder
(b1) Bereitstellen eines ersten Milchproduktes (a);
(b2) Bereitstellen eines zweiten Milchproduktes (b);
(b3) Unterwerfen des zweiten Milchproduktes einer Filtration unter Erhalt eines Permeats und eines Retentats;
(b4) gegebenenfalls Wärmebehandlung des Permeats;
(b5) Aufschäumen des gegebenenfalls wärmebehandelten Permeats unter Eintragung von Luft oder Inertgas; und
(b6) Versetzen des ersten Milchproduktes (a) mit dem aufgeschäumten Permeat des zweiten Milchproduktes (b). oder
(c1) Bereitstellen eines ersten Milchproduktes (a);
(c2) Bereitstellen eines zweiten Milchproduktes (b);
(c3) Unterwerfen des zweiten Milchproduktes einer Filtration unter Erhalt eines Permeats und eines Retentats;
(c4) gegebenenfalls Wärmebehandlung des Permeats;
(c5) Versetzen des ersten Milchproduktes (a) mit dem gegebenenfalls wärmebehandelten Permeat des zweiten Milchproduktes (b);
(c6) Wärmebehandlung der Mischung; und
(c7) Aufschäumen der Mischung unter Eintragung von Luft oder Inertgas.

Milchprodukte, die als Ausgangsstoffe für die Komponente (b) in Frage kommen, sind vorzugsweise ausgewählt aus der Gruppe, die gebildet wird von Magermilch, im Fettgehalt eingestellte Milch, pasteurisierte Milch, hocherhitzte Milch, ultrahocherhitzter Milch, Kondensmilch, Molke, Edelmolke, Sauermilch und Sauermilchprodukte sowie deren Mischungen.

Bei dem Filtrationsverfahren zur Herstellung der erfindungsgemäß zu verwendenden Permeate kann es sich um Diafiltration, Mikrofiltration, Ultrafiltration, Nanofiltration, Umkehrosmose, Elektrodialyse oder eine Kombination dieser Verfahren handeln, wie sie im Folgenden näher erläutert werden:

### MIKRO- ODER DIAFILTRATION

Die Mikro- oder Diafiltration gehört zu den Membrantrennverfahren. Der wesentliche Unterschied zu Ultra- und Nanofiltration besteht in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Nano- oder Ultrafiltration genannt, während die Filtration bei Porengrößen > 0,1 µm, speziell von etwa 0,1 bis 1 µm, gewöhnlich als Mikro- oder Diafiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmodule, Taschenfilter und Hohlfasermodule, die im Sinne der vorliegenden Erfindung alle grundsätzlich geeignet sind.

Sowohl die Mikro- als auch Diafiltration können im Sinne der vorliegenden Erfindung "heiß" oder "kalt", d.h. im Temperaturbereich von etwa 10 bis etwa 60 °C durchgeführt werden. Bevorzugt ist es jedoch, bei Temperaturen im Bereich von etwa 40 bis etwa 55 °C zu arbeiten.

### ULTRA- UND NANOFILTRATION

Ultra- und Nanofiltration sind Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch *"Cut-off"*) bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt.

Die Ausschlussgrenzen von Ultrafiltrationsmembranen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globalerer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar). In einer besonderen Ausführungsform der Erfindung kann man dem Fouling durch Einleiten von Kohlendioxid entgegenwirken, wie dies beispielsweise in der WO 2016 126810 A1 (IDAHO MILK PRODUCTS) beschrieben wird.

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Die Nanofiltration bevorzugt Porendurchmesser im Bereich von 100 bis 5.000 und vorzugsweise etwa 500 bis 2.000 Dalton.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Sowohl Ultra- als auch Nanofiltration können im Sinne der vorliegenden Erfindung "heiß" oder "kalt", d.h. im Temperaturbereich von etwa 10 bis etwa 60 °C durchgeführt werden. Bevorzugt ist es jedoch, bei Temperaturen im Bereich von 40 bis etwa 55 °C zu arbeiten.

### UMKEHROSMOSE

Die Umkehrosmose oder Reversosmose ist ein physikalisches Membranverfahren zur Konzentrierung von in Flüssigkeiten gelösten Stoffen, bei der mit Druck der natürliche Osmose-Prozess umgekehrt wird.

Das Verfahrensprinzip besteht darin, dass das Medium, in dem die Konzentration eines bestimmten Stoffes verringert werden soll, durch eine halbdurchlässige (semipermeable) Membran von dem Medium getrennt ist, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Typische Drücke für die Umkehrosmose liegen im Bereich von 3 bis 30 bar (Trinkwasserentsalzung) oder bis zu 8o bar (Meerwasserentsalzung).

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die "Verunreinigungsmoleküle" zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren, wie dies durch das Lösungs-Diffusions-Modell beschrieben wird: Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen.

### ELEKTRODIALYSE

Bei der Elektrodialyse handelt es sich um einen elektrochemisch getriebenen Membranprozess, in dem Ionenaustauschermembranen in Kombination mit einer elektrischen Potentialdifferenz benutzt werden, um ionische Spezies von ungeladenen Lösungsmitteln oder Verunreinigungen abzutrennen. Dazu wird in einem Elektrodialyse-Separator der Raum zwischen zwei Elektroden durch einen Stapel aus einander abwechselnden Anionen- und Kationenaustauschermembranen getrennt. Jedes Paar Ionenaustauschermembranen bildet eine separate "Zelle". In technischen Systemen bestehen diese Stapel aus mehr als zweihundert Membranpaaren. Wird eine elektrische Gleichspannung an die Elektroden angelegt, so wandern die Anionen zur Anode. Die Anionen können einfach die positiv geladenen Anionenaustauschermembranen passieren, aber sie werden jeweils an der nächstgelegenen negativ geladenen Kationenaustauschermembran gestoppt. Weil dasselbe (natürlich mit umgekehrten Vorzeichen) auch mit den Kationen geschieht, besteht der Nettoeffekt der Elektrodialyse in einer Anreicherung der Salze in den Zellen mit ungerader Nummer (Anionentauschermembran/Kationenaustauschermembran), während die Zellen mit gerader Nummer (Kationenaustauschermembran/Anionentauschermembran) an Salz verarmen. Die Lösungen mit erhöhter Salzkonzentration werden zum Konzentrat vereint, während die salzarmen Lösungen das Diluat bilden.

Es empfiehlt sich, dass man das Diluat abschließend mit einem Kationenaustauscher ("Polisher") behandelt und insbesondere mit der Dialyse eingeschleppte Natriumionen wieder abtrennt.

In einer besonders bevorzugten Ausführungsform wird zur Herstellung der Permeate Magermilch oder Magermilchkonzentrat einer Ultrafiltration unterworfen. Dabei wird die Ultrafiltration vorzugsweise mit einer Membran mit einem mittleren Porendurchmesser im Bereich von etwa 1.000 bis etwa 50.000 Dalton, vorzugsweise etwa 15.000 bis etwa 25.000 Dalton und/oder bei Temperaturen im Bereich von etwa 35 bis etwa 60 °C und vorzugsweise etwa 40 bis etwa 55 °C durchgeführt.

Ein weitere bevorzugte Variante besteht darin, dass man das Permeat gegebenenfalls nach Wärmebehandlung einer Magermilch oder im Fettgehalt eingestellter Milch zusetzt und diese anschließend einer Pasteurisierung, Hocherhitzung oder Ultrahocherhitzung unterwirft.

### TEMPERATURNACHBEHANDLUNG

Obwohl die Permeate schon unmittelbar nach der Filtration einsatzfähig sind, empfiehlt es sich, sie einer Temperaturnachbehandlung zu unterziehen. Darunter ist zu verstehen, die Permeate vorzugsweise über einen Zeitraum von etwa 4 Sekunden bis 5Minuten und insbesondere etwa 1 bis 3 Minuten auf eine Temperatur von vorzugsweise etwa 72 bis 150 °C und insbesondere etwa 90 bis 140 °C zu erhitzen.

Üblicherweise wird den Milchprodukten, die die Komponente (a) bilden, etwa 0,25 bis etwa 20 Gew.-%, vorzugsweise etwa 1 bis etwa 10 Gew.-% und insbesondere etwa 2,5 bis etwa 7,5 Gew.-% Permeat zugesetzt.

### GEWERBLICHE ANWENDBARKEIT

Ein weiterer Gegenstand der Erfindung betrifft die Verwendung des Permeats aus der Filtration eines Milchproduktes als Schäumer und/oder Schaumstabilisator für Milchprodukte. Dabei wird vorzugsweise ein Permeat aus der Ultrafiltration von Magermilch eingesetzt, wobei die Einsatzmengen in der Regel etwa 0,25 bis etwa 20 Gew.-% - bezogen auf die Milchprodukte - betragen.

### BEISPIELE

### BEISPIEL 1

Magermilch wurde bei einer Temperatur von 45 °C einer Ultrafiltration mit einer Spiralwickelmembran (Trennschärfe 25.000 Dalton) unterworfen. Die so erhaltenen Permeate wurden zum einen ohne Wärmebehandlung und zum anderen nach Erhitzen über einen Zeitraum von 1 Minute auf Temperaturen zwischen 95 und 140 °C in einen geeichten Standzylinder gegeben, mit einem Rührwerk auf höchster Stufe 1 Minute aufgeschäumt und anschließend die Schaumhöhe als Funktion der Zeit bestimmt. Die Ergebnisse sind in **Tabelle 1** zusammengefasst. Die Beispiele 1 bis 4 sind erfindungsgemäß, das Vergleichsbeispiel V1 wurde mit Magermilch ohne Zusatz durchgeführt.

**Tabelle 1**

| Schaumhöhe und Schaumbeständigkeit (ml) | | | | | |
|---|---|---|---|---|---|
| **Bsp.** | **Temperatur** | **Sofort** | **Nach 5 min** | **Nach 10 min** | **Nach 30 min** |
| V1 | | 40 | 20 | 0 | 0 |
| 1 | unbehandelt | 150 | 110 | 80 | 30 |
| 2 | 95°C | 200 | 180 | 120 | 60 |
| 3 | 125 °C | 250 | 220 | 200 | 150 |
| 4 | 140 °C | 180 | 160 | 100 | 50 |

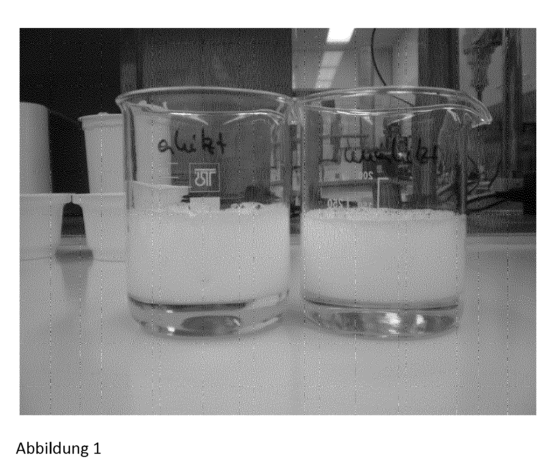

Überraschenderweise wurde gefunden, dass zum einen die Permeate eine viel höhere Schaumkraft als die Magermilch selbst besitzen und zum anderen die Wärmebehandlung einen Einfluss auf Schaumhöhe und Schaumbeständigkeit besitzt: die besten Ergebnisse wurden erhalten, wenn man die Permeate bei Temperaturen um 125 °C nachbehandelt. **Abbildung 1** zeigt die Schaumentwicklung für die Beispiele 1 (rechts) und 2 unmittelbar nach dem Aufschlagen.

### BEISPIEL 2

Jeweils 3, 5 oder 8 ml Milchpermeat gemäß den Beispielen 1 bis 4 wurden 100 g Magermilch zugegeben. Die Ansätze wurden wieder in Standzylinder gefüllt, wie in Beispiel 1 beschrieben aufgeschäumt und anschließend die Schaumhöhen und Schaumbeständigkeit bestimmt. Die Ergebnisse sind in **Tabelle 2** zusammengefasst. Die Beispiele 5 bis 13 sind erfindungsgemäß, Beispiel V2 dient zum Vergleich.

**Tabelle 2**

| Schaumhöhe und Schaumbeständigkeit (ml) | | | | | |
|---|---|---|---|---|---|
| **Bsp.** | **Permeat Bsp.** | **Menge (g)** | **Sofort** | **Nach 5 min** | **Nach 10 min** |
| V2 | - | 0 | 40 | 20 | 0 |
| 5 | 2 | 3 | 60 | 40 | 10 |
| 6 | | 5 | 80 | 50 | 20 |
| 7 | | 8 | 90 | 50 | 20 |
| 8 | 3 | 3 | 80 | 60 | 30 |
| 9 | | 5 | 100 | 80 | 40 |
| 10 | | 8 | 100 | 80 | 40 |
| 11 | 4 | 3 | 50 | 30 | 10 |
| 12 | | 5 | 60 | 30 | 10 |
| 13 | | 8 | 60 | 20 | 10 |

Auch in diesem Experiment erwiesen sich bei die mittleren Temperaturen erhitzten Permeate wirksamer als diejenigen, die bei niedrigeren oder höheren Temperaturen erhalten worden waren. Es zeigt sich ferner, dass ein Zusatz von 5 Gew.-% ausreichend um einen hohen Anfangsschaum zu erzeugen, der hinreichend lange stabil bleibt. Höhere Konzentrationen führen zu keinem proportionalen Anstieg mehr.

### BEISPIEL 3

Magermilch wurde bei einer Temperatur von 45 °C einer Nanofiltration mit einer Spiralwickelmembran (Trennschärfe 1.500 Dalton) unterworfen. Die so erhaltenen Permeate wurden zum einen ohne Wärmebehandlung und zum anderen nach Erhitzen über einen Zeitraum von 1 Minuten auf Temperaturen zwischen 95 und 140 °C in einen geeichten Standzylinder gegeben, mit einem Rührwerk auf höchster Stufe 1 Minute aufgeschäumt und anschließend die Schaumhöhe als Funktion der Zeit bestimmt. Die Ergebnisse sind in **Tabelle 3** zusammengefasst. Die Beispiel 14 bis 17 sind erfindungsgemäß, das Vergleichsbeispiel V3 wurde mit Magermilch durchgeführt.

**Tabelle 3**

| Schaumhöhe und Schaumbeständigkeit (ml) | | | | | |
|---|---|---|---|---|---|
| **Bsp.** | **Temperatur** | **Sofort** | **Nach 5 min** | **Nach 10 min** | **Nach 30 min** |
| V3 | - | 40 | 20 | 0 | 0 |
| 14 | unbehandelt | 100 | 70 | 60 | 10 |
| 15 | 95 °C | 180 | 160 | 100 | 40 |
| 16 | 125 °C | 220 | 190 | 170 | 120 |
| 17 | 140 °C | 150 | 110 | 90 | 20 |

Die Beispiele 14 bis 17 zeigen den gleichen Verlauf wie die Beispiele 1 bis 4, allerdings erweist sich die Ultrafiltration der Nanofiltration im Ergebnis überlegen.

### BEISPIEL 4

Magermilchkonzentrat wurden bei einer Temperatur von 45 °C einer Ultrafiltration mit einer Spiralwickelmembran (Trennschärfe 25.000 Dalton) unterworfen. Die so erhaltenen Retentate wurden zum einen ohne Wärmebehandlung und zum anderen nach Erhitzen über einen Zeitraum von 1 Minuten auf Temperaturen zwischen 95 und 140 °C in einen geeichten Standzylinder gegeben, mit einem Rührwerk auf höchster Stufe 1 Minute aufgeschäumt und anschließend die Schaumhöhe als Funktion der Zeit bestimmt. Die Ergebnisse sind in **Tabelle 4** zusammengefasst. Die Beispiele 18 bis 21 sind erfindungsgemäß, das Vergleichsbeispiel V4 wurde mit Magermilch durchgeführt.

**Tabelle 4 Schaumhöhe und Schaumbeständigkeit (ml)**

| **Bsp.** | **Temperatur** | **Sofort** | **Nach 5 min** | **Nach 10 min** | **Nach 30 min** |
|---|---|---|---|---|---|
| V4 | - | 40 | 20 | 0 | 0 |
| 18 | unbehandelt | 140 | 100 | 70 | 20 |
| 19 | 95 °C | 190 | 160 | 110 | 50 |
| 20 | 125 °C | 240 | 220 | 190 | 160 |
| 21 | 140 °C | 190 | 150 | 90 | 50 |

Die Permeate auf Basis von Magermilchkonzentrat erwiesen sich denen auf Basis Magermilch im Wesentlichen als vergleichbar, wenn auch die Permeate aus Magermilch geringfügig besser zu beurteilen waren.

### BEISPIEL 5

Sauermilch wurde bei einer Temperatur von 45°C einer Ultrafiltration mit einer Spiralwickelmembran (Trennschärfe 25.000 Dalton) unterworfen. Die so erhaltenen Permeate wurden zum einen ohne Wärmebehandlung und zum anderen nach Erhitzen über einen Zeitraum von 1 Minuten auf Temperaturen zwischen 95 und 140 °C in einen geeichten Standzylinder gegeben, mit einem Rührwerk auf höchster Stufe 1 Minute aufgeschäumt und anschließend die Schaumhöhe als Funktion der Zeit bestimmt. Die Ergebnisse sind in **Tabelle** 5 zusammengefasst. Die Beispiele 22 bis 25 sind erfindungsgemäß, das Vergleichsbeispiel V5 wurde mit Magermilch durchgeführt.

**Tabelle 5 Schaumhöhe und Schaumbeständigkeit (ml)**

| **Bsp.** | **Temperatur** | **Sofort** | **Nach 5 min** | **Nach 10 min** | **Nach 30 min** |
|---|---|---|---|---|---|
| V5 | - | 40 | 20 | 0 | 0 |
| 22 | unbehandelt | 80 | 50 | 30 | 10 |
| 23 | 95 °C | 100 | 90 | 50 | 20 |
| 24 | 125 °C | 110 | 100 | 50 | 20 |
| 25 | 140 °C | 80 | 50 | 30 | 10 |

Die Permeate auf Basis Sauermilch waren zwar ebenfalls wirksam, erwiesen sich denen auf Basis Magermilch und Magermilchkonzentrat aber unterlegen.

### BEISPIEL 6

Jeweils 5 Permeat gemäß den Beispielen 2, 19 und 23 wurden 100 g Ayran zugegeben. Die Ansätze wurden wieder in Standzylinder gefüllt, wie in Beispiel 1 beschrieben aufgeschäumt und anschließend die Schaumhöhen und Schaumbeständigkeit bestimmt. Anschließend wurde der Geschmack der Produkte von einem Panel bestehend auf 5 Testern gemäß folgender Skala beurteilt: (0) = keine Verbesserung (+) = geringfügige Verbesserung, (++) = deutliche Verbesserung. Die Ergebnisse sind in **Tabelle 6** zusammengefasst. Die Beispiele 26 bis 28 sind erfindungsgemäß, das Vergleichsbeispiel V6 wurde mit purem Ayran durchgeführt.

**Tabelle 6 Schaumhöhe und Schaumbeständigkeit (ml)**

| **Bsp.** | **Permeat Bsp.** | **Menge (g)** | **Sofort** | **Nach 10 min** | **Geschmack** |
|---|---|---|---|---|---|
| V6 | - | 10 | 0 | 0 | - |
| 26 | 2 | 50 | 30 | 20 | + |
| 27 | 19 | 40 | 30 | 10 | + |
| 28 | 23 | 40 | 20 | 10 | ++ |

Der Zusatz aller drei Permeate führte zu einem höheren Anfangsschaum und verbesserter Schaumbeständigkeit, wobei die Milchpermeate am besten abschnitten. Überraschenderweise wurde die stärkste Geschmacksverbesserung jedoch mit dem Permeat auf Sauermilchbasis erzielt.

## Patentansprüche

1. Aufschäumbare Milchzubereitung, enthaltend oder bestehend aus
(a) mindestens einem Milchprodukt und
(b) einem Zusatzstoff, der erhalten wird, in dem man ein Milchprodukt einer Filtration unterwirft, das Permeat abnimmt und es gegebenenfalls einer Temperaturnachbehandlung unterwirft.

2. Zubereitung nach Anspruch 1, **dadurch gekennzeichnet, dass** die Milchprodukte, die die Komponente (a) bilden ausgewählt sind aus der Gruppe, die gebildet wird von Magermilch, im Fettgehalt eingestellte Milch, pasteurisierte Milch, hocherhitzte Milch, ultrahocherhitzter Milch, Kondensmilch, Molke, Edelmolke, Sauermilch, Sauermilchprodukte, Rahm, Sahne, Joghurt, Kefir und Ayran sowie deren Gemische.

3. Zubereitung nach den Ansprüchen 1 und/oder 2, **dadurch gekennzeichnet, dass** der Zusatzstoff, der die Komponente (b) bildet, das Permeat aus der Filtration Magermilch, Magermilchkonzentrat, im Fettghalt eingestellte Milch, Konzentrat aus im Fettgehalt eingestellter Milch, pasteurisierte Milch, hocherhitzte Milch, Ultrahocherhitzter Milch, Kondensmilch, Molke, Edelmolke, Sauermilch, oder Sauermilchprodukten darstellt.

4. Zubereitungen nach mindestens einem der Ansprüche 1 bis 3, **dadurch gekennzeichnet, dass** der Zusatzstoff, der die Komponente (b) bildet, das Permeat aus einer Diafiltration, Mikrofiltration, Ultrafiltration, Nanofiltration, Umkehrosmose, Elektrodialyse oder einer Kombination dieser Schritte darstellt.

5. Zubereitung nach mindestens einem der Ansprüche 1 bis 4, **dadurch gekennzeichnet, dass** man dem Milchprodukt (a) etwa 0,25 bis etwa 20 Gew.-% des Zusatzstoffes (b) hinzugibt.

6. Verfahren zur Herstellung einer aufgeschäumten Milchzubereitung, umfassend die folgenden Schritte:
(a1) Bereitstellen eines ersten Milchproduktes (a);
(a2) Bereitstellen eines zweiten Milchproduktes (b);
(a3) Unterwerfen des zweiten Milchproduktes einer Filtration unter Erhalt eines Permeats und eines Retentats;
(a4) gegebenenfalls Wärmebehandlung des Permeats;
(a5) Versetzen des ersten Milchproduktes (a) mit dem gegebenenfalls wärmebehandelten Permeat des zweiten Milchproduktes (b); und
(a6) Aufschäumen der Mischung unter Eintragung von Luft oder Inertgas oder
(b1) Bereitstellen eines ersten Milchproduktes (a);
(b2) Bereitstellen eines zweiten Milchproduktes (b);
(b3) Unterwerfen des zweiten Milchproduktes einer Filtration unter Erhalt eines Permeats und eines Retentats;
(b4) gegebenenfalls Wärmebehandlung des Permeats;
(b5) Aufschäumen des gegebenenfalls wärmebehandelten Permeats unter Eintragung von Luft oder Inertgas; und
(b6) Versetzen des ersten Milchproduktes (a) mit dem aufgeschäumten Permeat des zweiten Milchproduktes (b).
oder
(c1) Bereitstellen eines ersten Milchproduktes (a);
(c2) Bereitstellen eines zweiten Milchproduktes (b);
(c3) Unterwerfen des zweiten Milchproduktes einer Filtration unter Erhalt eines Permeats und eines Retentats;
(c4) gegebenenfalls Wärmebehandlung des Permeats;
(c5) Versetzen des ersten Milchproduktes (a) mit dem gegebenenfalls wärmebehandelten Permeat des zweiten Milchproduktes (b);
(c6) Wärmebehandlung der Mischung;
(c7) Aufschäumen der Mischung unter Eintragung von Luft oder Inertgas.

7. Verfahren nach Anspruch 6, **dadurch gekennzeichnet, dass** man Magermilch und/oder deren Konzentrate einer Ultrafiltration unterwirft.

8. Verfahren nach den Ansprüchen 6 und/oder 7, **dadurch gekennzeichnet, dass** man die Ultrafiltration mit einer Membran mit einem mittleren Porendurchmesser im Bereich von etwa 1.000 bis etwa 50.000 Dalton und/oder bei Temperaturen im Bereich von 8 bis 65 °C durchführt.

9. Verfahren nach mindestens einem der Ansprüche 6 bis 8, **dadurch gekennzeichnet, dass** man die Permeate einer Wärmebehandlung über einen Zeitraum von etwa 4 Sekunden bis etwa 5 Minuten und/oder Temperaturen im Bereich von etwa 72 bis etwa 150 °C unterwirft.

10. Verfahren nach mindestens einem der Ansprüche 6 bis 9, **dadurch gekennzeichnet, dass** man dem Milchprodukt (a) etwa 0,5 bis etwa 10 Gew.-% des Permeats des Milchproduktes (b) zusetzt.

11. Verfahren nach mindestens einem der Ansprüche 6 bis 10, **dadurch gekennzeichnet, dass** man das Permeat gegebenenfalls nach Wärmebehandlung einer Magermilch oder im Fettgehalt eingestellter Milch zusetzt und diese anschließend einer Pasteurisierung, Hocherhitzung oder Ultrahocherhitzung unterwirft.

12. Verwendung des Permeats aus der Filtration eines Milchproduktes als Schäumer für Milchprodukte.

13. Verwendung des Permeats aus der Filtration eines Milchproduktes als Schaumstabilisator für Milchprodukte.

14. Verwendung nach den Ansprüchen 12 und/oder 13, **dadurch gekennzeichnet, dass** man Permeat aus der Ultrafiltration von Magermilch und/oder deren Konzentrate einsetzt.

15. Verwendung nach mindestens einem der Ansprüche 12 bis 14, **dadurch gekennzeichnet, dass** man das Permeat in Mengen von etwa 0,25 bis etwa 20 Gew.-% - bezogen auf die Milchprodukte (a) - einsetzt.
